# EUROPEAN PATENT SPECIFICATION

(11) **EP 0 343 333 B1**
(45) Date of publication and mention of the grant of the patent: **24.11.1993**
(21) Application number: 89104791.2
(22) Date of filing: 17.03.1989
(51) Int. Cl.: H01M 2/06, H01M 2/30

(54) **Electrical connection of the terminal posts of a lead-acid battery to the exterior**
Elektrische Verbindung der Endpole mit der Aussenseite einer Blei-Säure-Batterie
Connexion de pôles vers l'extérieur d'une batterie plomb-acide

(30) Priority: 27.05.1988 IT 2078488
(43) Date of publication of application: 29.11.1989
(73) Proprietor: F.I.A.M.M. - FABBRICA ITALIANA ACCUMULATORI MOTOCARRI MONTECCHIO S.p.A., I-36075 Montecchio Maggiore (Vicenza) (IT)
(72) Inventor: Magnaguagno, Angelo, 36075 Montecchio Maggiore (Vi) (IT); Chiarello, Lorenzo, 36073 Spagnago di Cornedo Vicentino (Vi) (IT)
(74) Representative: Lecce, Giovanni

(56) References cited:
- EP-A- 0 141 855
- US-A- 3 915 751
- PATENT ABSTRACTS OF JAPAN, vol. 9, no. 255 (E-349)[1978], 12th October 1985;& JP-A-60 105 163 (MATSUSHITA DENKI SANGYO K.K.) 10-06-1985
- IDEM
- PATENT ABSTRACTS OF JAPAN, vol. 6, no. 264 (E-150)[1142], 23rd December 1982; & JP-A-57 162 253 (SHINKOUBE DENKI K.K.) 06-10-1982
- IDEM
- PATENT ABSTRACTS OF JAPAN, vol. 9, no. 255 (E-349)[1978], 12th October 1985; & JP-A-60 105 164 (MATSUSHITA DENKI SANGYO K.K.) 10-06-1985
- PATENT ABSTRACTS OF JAPAN, vol. 9, no. 201 (E-336)[1924], 17th August 1985; & JP-A-60 65 451 (MATSUSHITA DENKI SANGYO K.K.) 15-04-1985

## Description

The present invention refers to the electrical connection of the battery posts to the exterior.

More particularly the present invention refers to the electrical connection to the exterior of a valve regulated lead-acid battery with internal gas recombination. It is well-know that, with valve regulated lead-acid batteries with internal gas recombination, one of the principal technical problems is obtaining good, economical electrical connection of the posts to the exterior.

The problem consists in how to make the metallic electrical connection through the cover, generally made of plastics, and how to make said metallic connection and the plastic material of the cover remain permanently sealed against possible seepage of the sulphuric acid electrolyte towards the exterior. The tightness of this seal becomes all-important in the case of lead-acid batteries with internal gas recombination. With such batteries, in fact, it is necessary not only to prevent any leakage of electrolyte towards the exterior but also to have a sufficient seal against any possible intake of air (and thus of oxygen) from outside in case of a negative internal pressure, in order to avoid rapid deterioration of the battery.

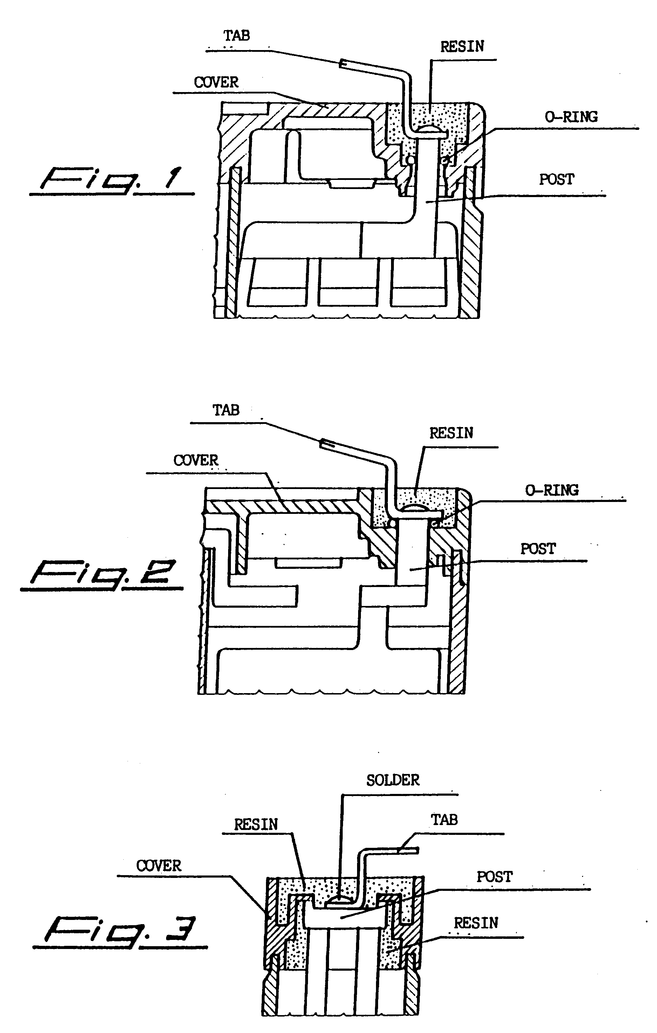

Various solutions to the problem have been proposed, some of which are shown in schematic form in Figures 1-3. In particular, one known solution consists of threading on to the battery posts, which have the form of short rods which project through two suitable holes in the cover, two special rubber sealing rings (O-rings) which allow, upon gluing of the cover to the battery, the exit holes of the posts (to which the tabs will have been soldered) to be sealed with an appropriate resin. Two examples of this kind of connection and its corresponding sealing are shown in Figures 1 & 2. This solution is simple, but rather costly owing to the use of O-rings and of the labour to place them. Another solution is illustrated in Fig. 3, whereby the battery is closed by sealing on a cover which originally has no exit holes for the posts which have a flat shape. This operation is performed with both cover and battery upside down. After the sealing resin has set, two holes are drilled in the cover until they reach the underlying terminals. The tabs are then soldered on to the tops of the posts, and the sealing is completed by pouring sealing resin round the tabs themselves. This method, while avoiding the higher costs due to the use of O-rings, makes the soldering difficult and rather weak as it has to be done on the head under the cover and thus practically inside the battery. The object of the present invention is to make an improved connection with the exterior of the terminal posts in valve regulated, internal gas recombination lead-acid batteries.

More particularly, the object of the present invention is to produce a connection of the above type which makes it easier to connect the terminals posts to the tabs and to eliminate the disadvantages of known types of connection and to obtain more certain, more effective and more economical connections and seals.

According to the present invention these and other objectives which will be revealed in the following descriptions are to be achieved by an electrical connection obtained by placing upside down, on an inverted cover provided with blind housings for the terminal posts and filled with an adherent resin, a battery provided with short rod-shaped posts; uprighting the whole when the resin has solidified, removing the external part of each housing and the resin it contains until the terminal posts are exposed and then connecting the tabs to each post.

This connection may be carried out by soldering, which can be further protected by additional application of resin from outside.

The essential features of the electrical connection according to the present invention which allow improvement of the conditions of both connection and sealing are effectively two, namely:
1. The use of rod-shaped posts, and
2. The provision of two housings in the battery cover, initially blind and without holes leading to the exterior, and within which the rod-shaped terminal posts are placed during the phase of sealing on the cover with adhesive resin.

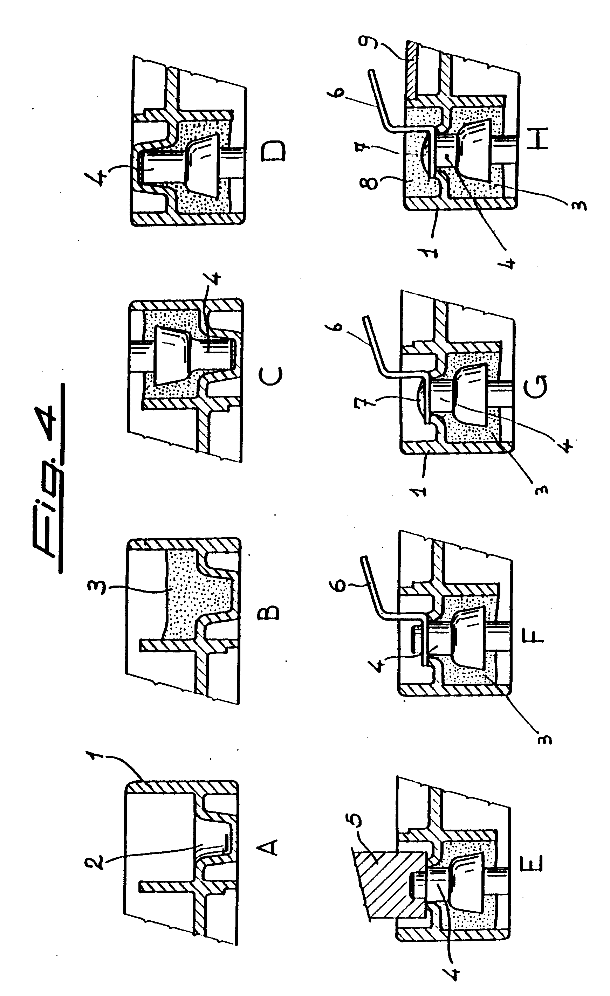

Once the rods have been freed of the solidified sealing resin it is possible to connect the tabs very easily, preferably by soldering them on from outside and then to seal this connection with resin. For better understanding of the electrical connection according to the present invention and the way in which it is to be obtained, these points will now be described in detail making reference to Figures 4A to 4H (attached), which show the various work phases schematically.

For convenience the sequence makes reference to only one terminal post, but it is obvious that the same succession applies to both battery posts.

Referring to the sketches, the battery cover (1), which is provided with a housing (2) for the post (4), is placed upside down, the housing is filled with liquid sealing resin (3) and the battery is inverted and inserted.

After these operations (phase A, B & C), each post (4) will be immersed in the resin within the housing.

Once the resin has solidified the battery and its sealed on cover (1) is uprighted (phase D). Then, with a suitable tool (5) the outer part of the housing is milled away, removing the resin until the terminal post (4) is bared (phase E).

The connecting tab (6), provided with a suitable eyelet (phase F), is slipped over the terminal pole (4), which has been freed from the solidified resin (3), so that the tab projects from the cover of the battery. The tab is then soldered (7) on to the post (phase G), and the joint is sealed off externally with resin (8) (phase H). As this stage, since the desired connection of the post with the exterior has been produced, the battery is ready to be finished by filling it with the electrolyte, setting the valves and finally closing the battery with the top lid (9).

## Claims

1. A process for the electrical connection with the exterior of the terminal post of a valve regulated, internal gas recombination lead-acid battery, said process consisting in:
forming the inserting parts in a cover (1);
filling the inserting parts with a liquid sealing resin (3);
inserting a battery with posts (4) upside down into the reversed cover (1) so that the posts (4) fit into the inserting parts;
uprighting the battery to its normal position after the sealing resin (3) has been set;
removing the top part and its resin with a tool (5) to expose the tip of the post (4), and
connecting a tab (6) over the free post (4) so that the tab (6) projects from the cover (1), characterized in that the posts (4) are of rod-shaped type and the cover (1) is provided with two housings (2) wherein the rod-shaped posts (4) are inserted and immersed into the resin (3).

2. The process according to claim 1, characterized in that the tab (6) is provided with an eyelet which is slipped over each free post (4) and soldered thereon.

3. The process according to claim 2, characterized in that the joint between the tab (6) and the post (4) is sealed off externally with a resin (8).-

## Patentansprüche

1. Verfahren für die elektrische Verbindung mit dem Äußeren eines Anschlußpols einer ventilregulierten Blei-Säure-Batterie mit innerer Gasrekombination, wobei
Einführungsteile in einem Deckel (1) geformt werden;
die Einführungsteile mit einem flüssigen, dichtenden Harz (3) gefüllt werden;
eine Batterie mit Polen (4) mit der Oberseite nach unten derart in den umgedrehten Deckel (1) eingeführt wird, daß die Pole (4) passend in den Einführungsteilen sitzen;
nach dem Erhärten des dichtenden Harzes (3) die Batterie in ihre normale Stellung aufgerichtet wird;
der oberste Teil und sein Harz mit einem Werkzeug (5) entfernt werden, um das Ende des Pols (4) freizulegen, und
eine Lasche (6) derart mit dem freigelegten Pol (4) verbunden wird, daß sie vom Deckel (1) absteht, **dadurch gekennzeichnet**, daß die Pole (4) stabförmig sind und der Deckel (1) mit zwei Aufnahmen (2) versehen ist, worin die stabförmigen Pole (4) eingeführt und in das Harz (3) eingetaucht werden.

2. Verfahren nach Anspruch 1, **dadurch gekennzeichnet**, daß die Lasche (6) mit einer Öse versehen ist, welche jeweils auf den freigelegten Pol (4) geschoben und daran angelötet wird.

3. Verfahren nach Anspruch 2, **dadurch gekennzeichnet**, daß die Verbindung zwischen der Lasche (6) und dem Pol (4) mit einem Harz (8) nach außen abgedichtet wird.

## Revendications

1. Procédé de connexion électrique avec l'extérieur d'une borne d'une batterie plomb-acide à recombination interne de gaz, réglée par soupape, ledit procédé consistant à :
- former les parties d'insertion dans un capot (1),
- remplir les parties d'insertion avec une résine liquide d'étanchéité (3),
- insérer la batterie avec les bornes (4) la tête en bas dans le capot retourné (1), de manière à ce que les bornes (4) s'engagent dans les parties d'insertion,
- redresser la batterie dans sa position normale après que la résine d'étanchéité (3) se soit figée,
- enlever la partie supérieure et sa résine avec un outil (5) pour mettre à nu la pointe de la borne (4) et
- glisser une patte (6) sur la borne libre (4) de manière à ce que la patte fasse saillie du capot (1),
caractérisé en ce que les bornes (4) ont la forme de tiges et que le capot (1) comporte deux logements (2) dans lesquels les bornes en forme de tiges (4) sont insérées et novées dans de la résine (3).

2. Procédé selon la revendication 1,
caractérisé en ce que la patte (6) comporte une cosse qu'on glisse sur chaque borne libre (4) et qu'on fixe par soudure.

3. Procédé selon la revendication 2,
caractérisé en ce que le joint entre la patte (6) et la borne est établi par l'extérieur avec de la résine (8).
